# EUROPÄISCHE PATENTSCHRIFT

(11) **EP 3 007 939 B1**
(45) Veröffentlichungstag und Bekanntmachung des Hinweises auf die Patenterteilung: **06.02.2019**
(21) Anmeldenummer: 14730803.5
(22) Anmeldetag: 03.06.2014
(51) Int. Cl.: B60R 21/217, B60R 21/262, F16L 33/30, A47C 27/08

(54) **VERBINDUNGSANORDNUNG SOWIE EIN VERFAHREN ZUM HERSTELLEN EINER VERBINDUNGSANORDNUNG**
CONNECTION ARRANGEMENT AND METHOD FOR PRODUCING A CONNECTION ARRANGEMENT
ENSEMBLE DE RACCORDEMENT ET PROCÉDÉ DE PRODUCTION DE CET ENSEMBLE DE RACCORDEMENT

(30) Priorität: 10.06.2013 DE 102013009723
(43) Veröffentlichungstag der Anmeldung: 20.04.2016
(73) Patentinhaber: Global Safety Textiles GmbH, 79689 Maulburg (DE)
(72) Erfinder: RUSCHULTE, Jörg, 79736 Rickenbach (DE); BAESCH, Bastian, 70599 Stuttgart (DE); HOINKIS, Simon, 73760 Ostfildern (DE); RIETHMUELLER, Christoph, 71229 Leonberg (DE)
(74) Vertreter: Fischer & Konnerth
(86) Internationale Anmeldenummer: PCT/EP2014/061507
(87) Internationale Veröffentlichungsnummer: WO 2014/198589

(56) Entgegenhaltungen:
- EP-A2- 0 918 184
- DE-A1- 10 211 061
- DE-A1- 10 225 032
- DE-A1-102007 024 133
- FR-A1- 2 949 529
- GB-A- 2 264 338
- JP-A- 2004 011 878
- US-A- 3 210 100
- US-A- 3 525 542
- US-A1- 2002 175 508
- US-A1- 2006 012 168
- US-A1- 2008 211 211

## Beschreibung

Die vorliegende Erfindung betrifft eine Verbindungsanordnung zur Verbindung eines Anschlussmundes eines textilen Gassacks mit einem Anschluss, welcher eine ovale oder im Wesentlichen zylindrische harte äußere Mantelfläche aufweist, wobei der Anschluss in den Anschlussmund eingefügt ist, sowie ein Verfahren zum Herstellen einer Verbindungsanordnung.

Es ist eine Unzahl von Einrichtungen für pneumatische Verbindungen für im Wesentlichen harte Verbindungspartner auf dem Markt zu finden. Wesentlich geringer ist die Anzahl auf dem Markt angebotener Verbindungen für den sog. Hart-Weich-Übergang, zum Beispiel für Anschlussmöglichkeiten, mit denen z. B. pneumatisch belastete Textilien, in der Regel Luft- oder Gassäcke (Weichpartner), an insbesondere standardisierte Pneumatikeinrichtungen (Hartpartner) angeschlossen werden können. Derartige Verbindungen sind beispielsweise von der Herstellung von Seitenairbags bekannt, wobei jeweils ein harter zylindrischer Generatoranschluss in den weichen Generatormund des textilen Seitenairbags eingefügt wird und der textile Generatormund mit einer oder mehreren Schlauchschellen auf dem harten Generatoranschluss befestigt wird. Bei derartigen Verbindungen, welche üblicherweise maximal nur etwa fünf Sekunden dicht bleiben müssen, ist eine Dichtigkeit auf Dauer kein Thema. Aus diesem Grund sind derartige Verbindungsanordnungen für einen dauerhaften und zuverlässigen Betrieb, wie er beim Einsatz von dauerhaft oder wechsellastig, statisch oder dynamisch mit Druck beaufschlagten Luft- oder Gassäcken erforderlich ist, ungeeignet. Die sog. horizontale Leckage zwischen dem Textil und dem harten Anschlussteil ist bei sämtlichen aus dem Stand der Technik bekannten Lösungen nicht wirtschaftlich beherrschbar.

Die US 2008/0211211 A1 offenbart eine Verbindungsanordnung gemäß dem Oberbegriff von Anspruch 1.

Der Erfindung liegt die Aufgabe zugrunde, eine Verbindungsanordnung zur Verbindung eines Anschlussmundes eines textilen Bauteils, insbesondere eines Gassacks mit einem Anschluss und ein Verfahren zur Herstellung einer solchen vorzuschlagen, welche die aus dem Stand der Technik bekannten Nachteile vermeiden oder zumindest stark verringern.

Die Aufgabe wird gelöst, zunächst mittels einer ersten Lösung, nämlich mit einer Verbindungsanordnung gemäß Anspruch 1. Mit dieser erfindungsgemäßen Lösung ist es erstmals möglich, ein "Zusammenknüllen" des weichen textilen Anschlussmundes um den Anschluss herum zu vermeiden. Es ergeben sich deshalb zwischen Anschlussmund und Anschluss, insbesondere längs des Anschlusses keinerlei Falten oder Gewebeverlegungen, welche, wenn auch winzige, dennoch nicht duldbare Leckagekanäle zur Folge hätten, wodurch eine zuverlässige Funktion des Gassacks nicht möglich wäre. Aufgrund der erfindungsgemäßen Ausbildung der Verbindungsanordnung liegt das Textil des Anschlussmundes mit seinem inneren Umfang "satt" am äußeren Umfang der harten Mantelfläche des Anschlusses an und ergibt eine gas- und fluiddichte Verbindung. Hierzu ist der Anschlussmund im dehnfähigen Bereich des Gewebes des Anschlussmunds geringfügig radial nach außen gedehnt.

In einer vorteilhaften Ausbildung der Erfindung ist die Verbindungsanordnung derart gestaltet, dass die harte oder hartelastische äußere Mantelfläche des Anschlusses an ihrem beim Einfügen in den Anschlussmund zu diesem zeigenden Anschlussende verjüngt ist. Dies erlaubt eine Vereinfachung beim Einbringen des Anschlusses in den Anschlussmund. Bei dieser Ausführung sind keine Hilfsmittel zum Einfügen bzw. Einführen des Anschlusses in den Anschlussmund erforderlich. Die Montage ist kostengünstiger.

In einer weiteren vorteilhaften Ausbildung der Erfindung ist die Verbindungsanordnung derart gestaltet, dass die harte oder hartelastische äußere Mantelfläche des Anschlusses an ihrem beim Einfügen in den Anschlussmund zu diesem zeigenden Anschlussende mit einem differentiellen Übergang ausgebildet. Der differentielle Übergang ermöglicht eine, vom textilen Bauteil aus gesehen, bis zur im Wesentlichen zylindrischen harten oder hartelastischen äußeren Mantelfläche des Anschlusses differenziell wachsende Dehnung des Anschlussmundes des textilen Bauteils, wodurch ein optimaler Hart-Weich-Übergang und damit eine optimal dichte Kopplung zwischen textilem Bauteil und Anschluss gebildet wird.

Gemäß der Erfindung ist die Verbindungsanordnung derart gestaltet, dass sie eine an die harte äußere Mantelfläche des Anschlusses anschließende hartelastische äußere Mantelfläche aufweist. Diese erfindungsgemäße Variante einer Verbindungsanordnung bietet die vorteilhafte Möglichkeit einer zusätzlichen Dichtungseinrichtung, bei welcher nun eine zweifache Dichtungspaarung Textil mit harter *und* mit hartelastischer Mantelfläche zum Einsatz kommt. Einerseits wird die Dichtfläche zwischen dem Anschlussmund und dem Anschluss vergrößert, was die Sicherheit der Dichtung erhöht und andererseits wird eine zusätzliche, von der standardmäßigen Dichtung unabhängige Dichtung erzeugt. Im Ergebnis führt dies vorteilhafterweise zu einer zusätzlichen Dichtung, gleichsam auch als mögliche zusätzliche Sicherung.

In einer vorteilhaften Weiterbildung der Erfindung ist die vorgenannte Verbindungsanordnung derart gestaltet, dass sie eine an die harte äußere Mantelfläche des Anschlusses auf dessen von seinem Anschlussende wegweisender Seite an die harte äußere Mantelfläche anschließende hartelastische äußere Mantelfläche aufweist. Dies ermöglicht vorteilhafterweise eine vom textilen Bauteil wegweisende beliebige Verlängerung der anschließenden hartelastischen äußeren Mantelfläche.

In wieder einer anderen vorteilhaften Ausbildung der Erfindung ist die Verbindungsanordnung derart gestaltet, dass sie auf der vom Anschlussende des Anschlussmundes zum textilen Bauteil hinzeigenden Seite eine an die harte äußere Mantelfläche anschließende, hartelastische äußere Mantelfläche aufweist. Diese erfindungsgemäße Variante einer Verbindungsanordnung bietet ebenfalls die vorteilhafte Möglichkeit einer zusätzlichen Dichtungseinrichtung, bei welcher nun die o. g. Dichtungspaarung in der Hauptsache *im* Anschlussmund zum Einsatz kommt. Hierbei wird die Dichtfläche zwischen Anschlussmund und Anschluss vergrößert, wodurch ebenfalls die Sicherheit der Dichtung erhöht wird.

In einer weiteren vorteilhaften Ausbildung der Erfindung ist die Verbindungsanordnung derart gestaltet, dass der äußere Umfang der hartelastischen äußeren Mantelfläche mit dem Umfang der harten Mantelfläche des Anschlusses im Wesentlichen übereinstimmt. Dies ermöglicht vorteilhafterweise einen harmonischen Übergang der Mantelflächen und erleichtert eine schonende Montage der beiden Verbindungspartner.

In einer weiteren vorteilhaften Ausbildung der Erfindung ist die Verbindungsanordnung derart gestaltet, dass der äußere Umfang der hartelastischen äußeren Mantelfläche größer ist als der Umfang der harten Mantelfläche des Anschlusses. Diese Variante erleichtert vorteilhafterweise die Bestimmung eines definierten Einschubwegs bzw. einer definierten Einschubtiefe des Anschlusses in den Anschlussmund.

Vorteilhafterweise können bei einer anderen Ausbildung der Erfindung der Verbindungsanordnung die Umfänge des Anschlusses so differieren, dass der Umfang der hartelastischen Mantelfläche kleiner ist als der der harten Mantelfläche. Dies ist dann von Vorteil, wenn eine besonders abgestufte Fixierung einer um den Anschlussmund herum angeordneten Klemme gewünscht wird.

In noch einer weiteren vorteilhaften Ausbildung der Erfindung ist die Verbindungsanordnung derart gestaltet, dass die harte äußere Mantelfläche und/oder die hartelastische äußere Mantelfläche in ausgewählten Bereichen ringförmige Erhebungen aufweisen. Es ist unschwer einzusehen, dass eine derartige Modifikation der äußeren Mantelfläche(n) eine weitere Erhöhung der Abdichtung des Anschlussmundes gegen den Anschluss bedeutet.

In wieder einer anderen vorteilhaften Ausbildung der Erfindung ist die Verbindungsanordnung derart gestaltet, dass sie eine den Anschlussmund des textilen Gassacks umschließende Sicherungsklemme aufweist. Hierdurch lässt sich eine weitere Erhöhung der Sicherheit der Dichtung erreichen.

In noch einer weiteren vorteilhaften Ausbildung der Erfindung ist die Verbindungsanordnung mit einer Ohrenklemme als Sicherungsklemme ausgebildet. Der Einsatz derartiger Klemmen ermöglicht vorteilhafterweise eine wesentlich schnellere Montage und führt damit zu einer noch wirtschaftlicheren Lösung.

In einer weiteren vorteilhaften Ausbildung der Erfindung ist die Verbindungsanordnung derart gestaltet, dass als Sicherungsklemme eine Fahnenklemme zum Einsatz kommt, wobei den Anschlussmund des textilen Gassacks säumende Nahtbereiche radial nach außen in die äußeren Ohren der Fahnenklemme ragen. Die textilen Gassäcke gemäß der Erfindung bestehen aus wenigstens zwei übereinanderliegenden Gewebelagen, welche in Nahtbereichen miteinander verbunden sind. Ein Anschlussmund gemäß der Erfindung ist von Nahtbereichen, also zusammengenähten Doppellagen oder einlagigen Gewebepartien gesäumt, welche nach dem Einfügen des Anschlusses in den Anschlussmund vom Anschlussmund radial nach außen "abstehen". Ist bei der zuvor beschriebenen erfindungsgemäßen Variante eine Ohrenklemme im Einsatz, für deren Montage die o. g. Partien umgeschlagen und an der Außenfläche des Anschlussmundes angelegt werden müssen, so entfällt auch dieses Umschlagen beim Einsatz einer Fahnenklemme, womit eine weitere Reduzierung von möglichen Undichtigkeiten erfolgt.

In noch einer weiteren vorteilhaften Ausbildung der Erfindung ist die Verbindungsanordnung derart gestaltet, dass der Anschluss eine Einrichtung zur Kopplung mit Anschlussvorrichtungen, insbesondere Standardschraubverbindungen aufweist. Hierzu gehören vorteilhafterweise Innen- und Außengewinde sowie Bajonettkupplungen und dergleichen.

Die Aufgabe wird weiterhin gelöst mittels eines Verfahrens zum Herstellen einer Verbindungsanordnung nach einer der vorher diskutierten Lösungen, gemäß Anspruch 13. Diese im Prinzip sehr einfach auszuführende Vorgehensweise wendet sich von allen im Stand der Technik bisher zur Herstellung von dichten Verbindungsanordnungen gegangenen Wegen ab und geht erfindungsgemäß den Weg zur Schaffung einer nahezu idealen Übereinstimmung der zu verbindenden Partner. Die "radiale" Aufdehnung des textilen Anschlussmundes bzw. des Materials des textilen durch den und mithilfe des Verbindungspartner(s) 'Harter oder Hartelastischer Anschluss' führt zu einer von den Verbindungspartnern selbst geformten "engsten Packung" und damit zu idealen Dichtungsverhältnissen.

Zum besseren Verständnis der Erfindung wird diese im Folgenden anhand von Ausführungsbeispielen mit Hilfe einer Zeichnung näher erläutert.
- Fig. 1: zeigt in perspektivischer Ansicht schematisch einen Gassack in nicht aufgeblasenem Zustand zum Einsatz einer erfindungsgemäßen Verbindungsanordnung.
- Fig. 2: zeigt in perspektivischer Ansicht schematisch einen nicht erfinderischen Anschlussmund des Gassacks gemäß Fig. 1, wobei der Anschlussmund geöffnet dargestellt ist und einen Anschluss "kurz vor dem Einfügen".
- Fig. 3: zeigt in einer Teilschnittdarstellung schematisch den nicht erfinderischen Anschlussmund gemäß Fig. 2 mit teilweise eingefügtem Anschluss.
- Fig. 4: zeigt in einer Teilschnittdarstellung schematisch den Anschlussmund analog Fig. 3 mit verjüngtem Anschlussende und zusätzlicher hartelastischer Mantelfläche.
- Fig. 4a: zeigt in einer Teilschnittdarstellung schematisch den Anschlussmund analog den Fig. 3 und 4, jedoch mit Anschlussende mit differentiellem Übergang und zusätzlicher hartelastischer Mantelfläche ausgebildet.
- Fig. 4b: zeigt in einer Teilschnittdarstellung schematisch eine Variante eines Anschlussmundes mit Mantelflächen mit unterschiedlichen Umfängen sowie einer Anschlusseinrichtung.
- Fig. 4c: zeigt in einer Teilschnittdarstellung schematisch eine weitere Variante eines Anschlussmundes mit einer weiteren Anschlusseinrichtung.
- Fig. 4d: zeigt in einer Teilschnittdarstellung schematisch eine weitere Variante eines Anschlussmundes mit einer weiteren Variante einer abgestuft konfigurierten Hülse mit vorzugsweise hartelastischer Mantelfläche.
- Fig. 4e: zeigt in einer Schnittdarstellung schematisch eine weitere Variante eines Anschlusses mit kombiniert harter und hartelastischer Mantelfläche.
- Fig. 4f: zeigt in einer Schnittdarstellung schematisch eine weitere, nicht erfinderische Variante eines Anschlusses mit hartelastischer Mantelfläche.
- Fig. 5: zeigt in perspektivischer Ansicht schematisch einen Anschlussmund des Gassacks gemäß Fig. 1 und Fig. 2 mit eingefügtem Anschluss und Sicherungsklemme.
- Fig. 6: zeigt in Draufsicht (Blickrichtung gemäß Pfeil B aus Fig. 5) schematisch die Situation gemäß Fig. 5.
- Fig. 7: zeigt in Draufsicht (gemäß Fig. 6) schematisch die Situation gemäß Fig. 6, jedoch mit einer Ohrenklemme.
- Fig. 8: zeigt in Draufsicht (gemäß Fig. 6) schematisch die Situation gemäß Fig. 6, jedoch mit einer Fahnenklemme.
- Fig. 9: zeigt in perspektivischer Ansicht schematisch einen Gassack mit Verbindungsanordnung in Verbindung mit einer Versorgungsleitung.

Zur Definition und Verwendung der Begriffe "harter" und "hartelastischer" Mantelflächen soll für die vorliegende Beschreibung grundsätzlich gelten, dass hiermit der Gegensatz zum "weichen" textilen Bauteil aufgezeigt werden soll. Die erfindungsgemäß hier als Elemente mit als "hart" bezeichneten Mantelflächen sind aus Werkstoffen wie Metallen, wie Aluminium etc. gebildet. Elemente mit als "hartelastisch" bezeichneten Mantelflächen sind aus Werkstoffen wie z. B. Kunststoffen gebildet. Beide, Elemente mit "harten" wie mit "hartelastischen" Mantelflächen werden als gegenüber Textilien und textilen Bauteilen wie z. b. Gassäcken unelastische Materialien betrachtet. Der hier besprochene Hart-Weich-Übergang spielt sich zwischen einerseits dem Verbindungspartner mit "harter" und "hartelastischer" Qualität ("Hart"), also dem Anschluss und andererseits dem Verbindungspartner mit weicher Qualität ("Weich"), also dem textilen Bauteil, bzw. dessen Anschlussmund ab.

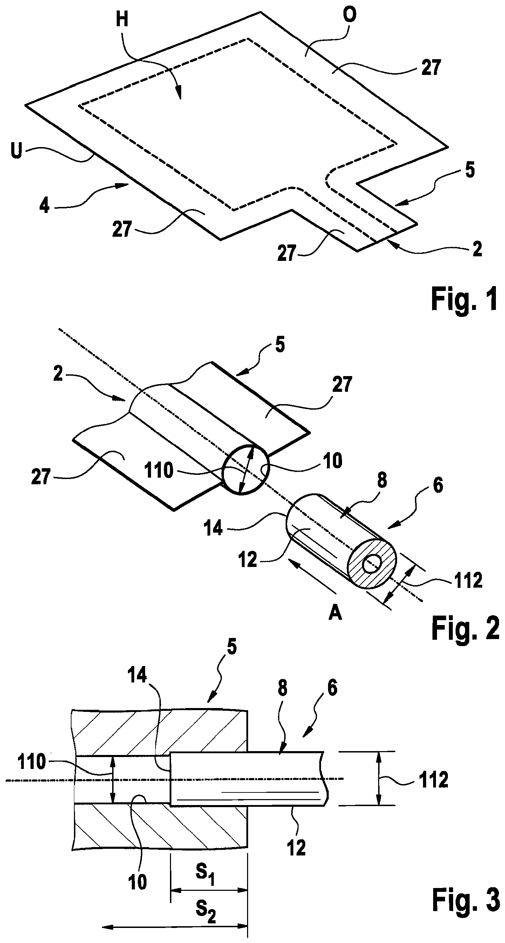

In Fig. 1 ist ein einfaches Beispiel eines nicht aufgeblasenen textilen Gassacks 4 gezeigt, der zwei Gewebelagen O und U aufweist, zwischen welchen sich ein aufblasbarer Hohlraum H befindet. Die Gewebelagen O und U sind über Nahtbereiche 27 miteinander verbunden. Diese Nahtbereiche 27 - in Fig. 1 werden sie beispielsweise durch die Umfangslinie das Gassacks 4 und die dazu parallele gestrichelte Linie umfasst - können aus tatsächlich genähten Nähten bestehen oder bei in einem Stück gewebten Gassäcken, sog. OPW-Gassäcken (one-piecewoven) gewebte Nähte sein. Optional ist sind die Gewebelagen O und U des Gassacks 4 mit einer Dichtungsschicht beispielsweise aus Silikon oder anderen Dichtungsmaterialien, versehen, möglicherweise damit laminiert. Der Gassack wird beim bestimmungsgemäßen Einsatz über einen sog. Anschlussmund 2 mit einem (nicht gezeigten) Füllmedium wie Luft, Gas oder Fluid ver- und entsorgt und damit zur Ausdehnung "in die dritte Dimension" gebracht bzw. aus dieser wieder in seinen - wie dargestellt - entleerten Zustand gebracht. Der Anschlussmund 2 ist durch eine am Gassack angeformte Fahne 5 gebildet, welche, wie der Gassack 4, von Nahtbereichen 27 gesäumt ist.

Bewegt man die Nahtbereiche 27 des Anschlussmundes 2 aufeinander zu, dann entsteht die in Fig. 2 gezeigte Situation. Der Hohlraum des Anschlussmundes 2 öffnet sich in eine etwa ovale oder runde Form und ist damit zur Aufnahme eines in Fig. 2 auf gemeinsamer Achse bereitstehenden Anschlusses 6 bereit, welcher in Richtung des Pfeils A auf den Anschlussmund 2 zu bewegt und in diesen eingefügt werden soll. Erfindungsgemäß sind der Umfang 10 des Anschlussmundes 2 und auch dessen Durchmesser 110 vor dem Einfügen des Anschlusses 6 in den Anschlussmund 2 kleiner als der Umfang 12 des Anschlusses 6 und dessen Durchmessers 112.

Fig. 3 zeigt die Situation, in welcher der Anschluss 6 bereits eine Strecke S₁ in den Anschlussmund 2 eingefügt, bzw. eingeschoben ist. Aus der Differenz der Durchmesser 110 und 112 von Anschlussmund 2 und Anschluss 6 bzw. deren Umfängen 10 und 12 wird ersichtlich, dass der Anschlussmund 2 beim Einschieben des Anschlusses 6 gedehnt werden musste. Um den Anschluss 6 - in Fig. 3 nach links - weiter in den Anschlussmund 2 zu schieben, muss dieser den Anschlussmund 2 mit seinem Anschlussende 14 weiterwandernd aufdrängen. Der erfindungsgemäße Effekt des Aufdrängens des Anschlussmundes 2 ist seine dicht umschließende Lage um den Anschluss 6, welche erfindungsgemäß eine dichte Verbindungsanordnung 1 schafft. Der Anschlussmund 2 aus weichem, dehnbarem textilen Gewebematerial schmiegt sich dicht an die äußere harte Mantelfläche 8 des Anschlusses 6. Die Tatsache, dass sich der Anschluss 6 auf seinem Weg in den Anschlussmund 2 in diesem seinen Raum und auch nur diesen sozusagen sucht oder schafft, indem er den inneren Umfang 10 des Anschlussmundes 2 an den äußeren Umfang 12 des Anschlusses 6 maßgenau anpasst, führt zur dichtesten und engsten möglichen Verbindung. Der Anschlussmund 2 wird durch keinerlei Falten oder Umschlagen zerknittert sondern liegt "satt" und damit dicht am äußeren Umfang 12 des Anschlusses 6 an.

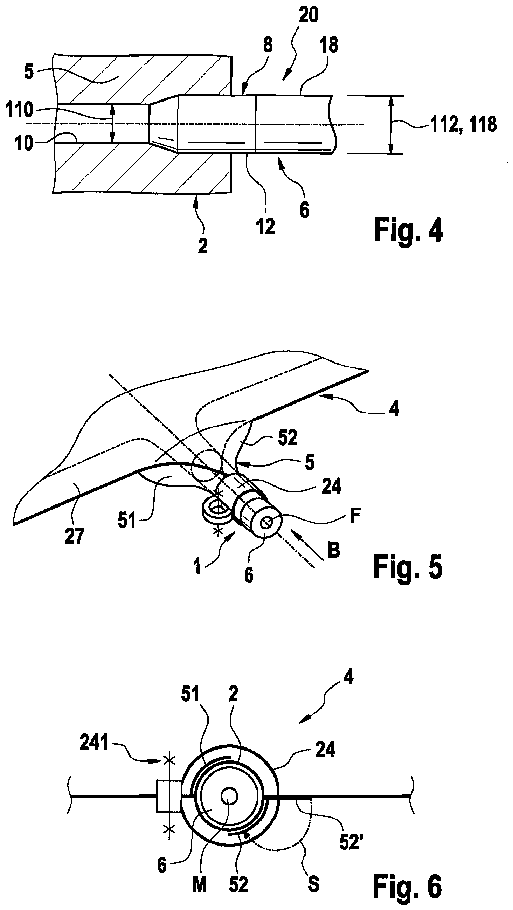

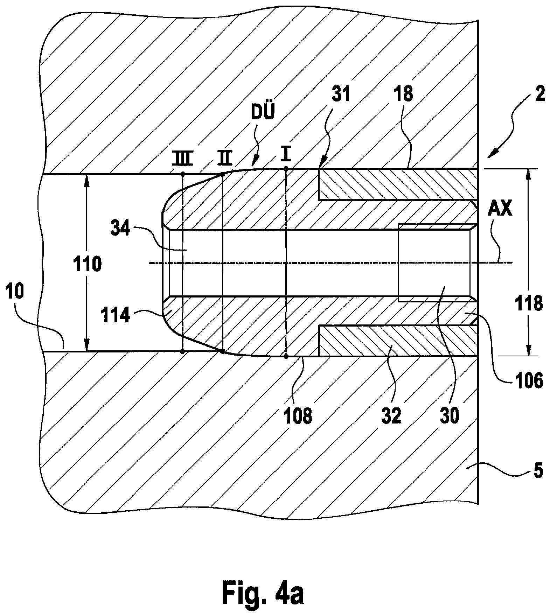

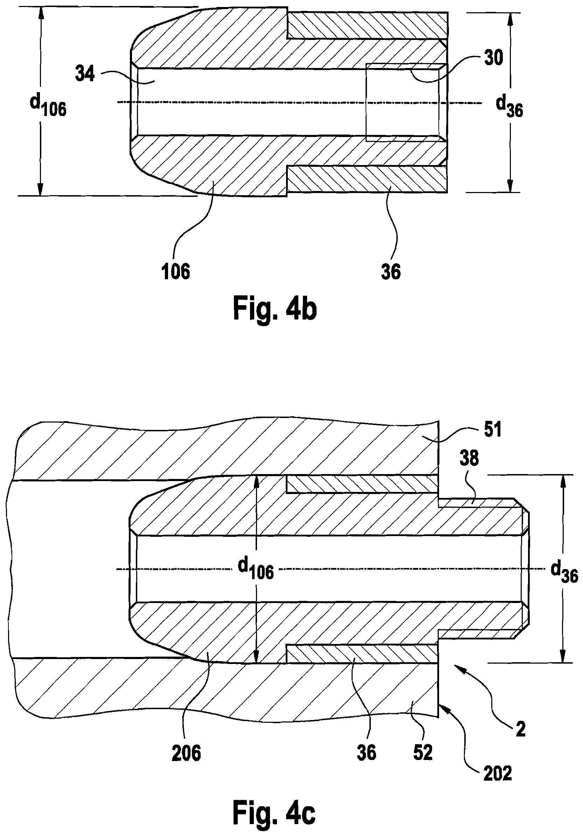

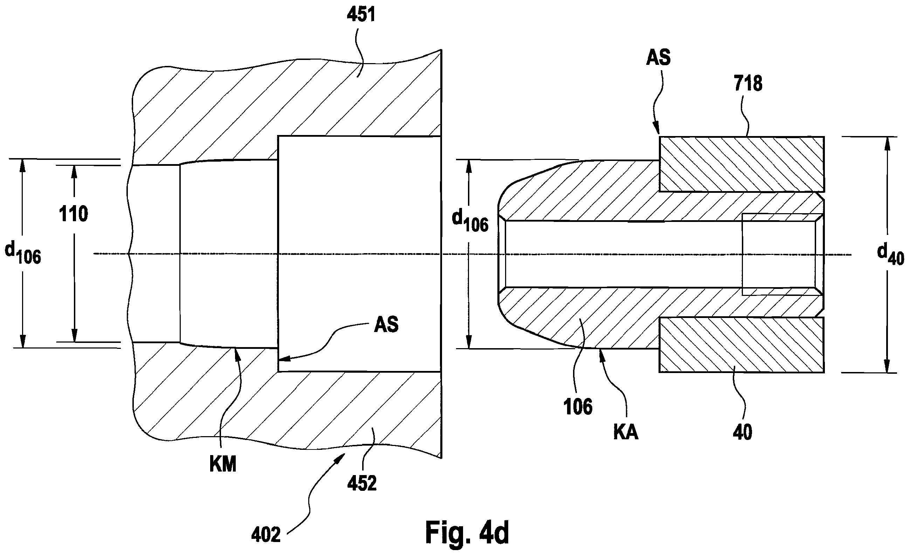

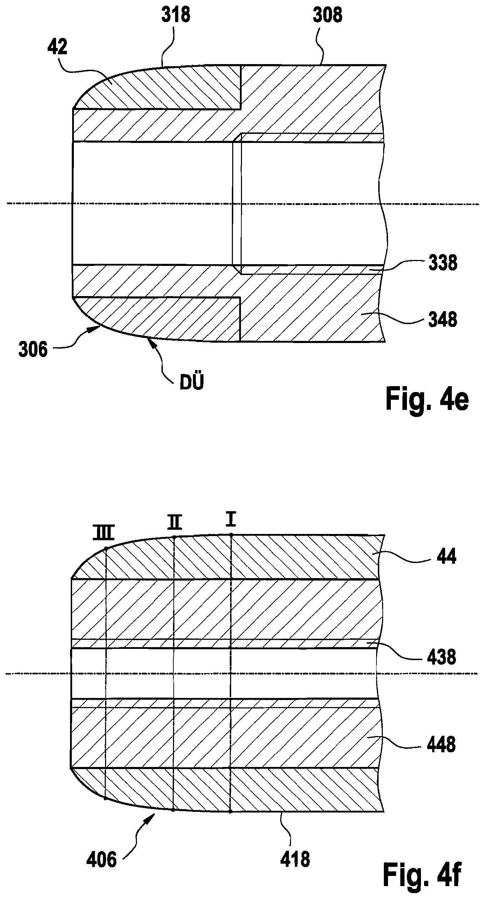

In Fig. 4 ist eine erfindungsgemäß vorteilhaft weitergebildete Form des Anschlussendes 14 des Anschlusses 6 gezeigt. Die sich zum Anschlussende 14 verjüngende - hier konische Form des Anschlusses 6 lässt sich einfacher in den Anschlussmund einfügen und erübrigt besondere (nicht gezeigte) Einführhilfen. Ein leicht abgerundetes oder anders geformtes sich verjüngendes Anschlussende 14 ist ebenfalls möglich.

Fig. 4 ist weiterhin eine erfindungsgemäße Variante des Anschlusses 6 zu entnehmen, bei welcher auf dessen von seinem Anschlussende 14 weg weisender Seite 20 eine an die harte äußere Mantelfläche 8 anschließende hartelastische äußere Mantelfläche 18, z. B. aus Kunststoff angeordnet ist, deren äußerer Umfang 18 mit dem Umfang 12 der harten Mantelfläche 8 des Anschlusses 6 bzw. deren Durchmesser 118 mit dessen Durchmesser 112 im Wesentlichen übereinstimmt. In den Fig. 3 und 4 sind die Partien der Fahne 5, da in der Nahtebene geschnitten, schraffiert dargestellt.

Eine erfindungsgemäße Variante kann man auch gut aus Fig. 4a entnehmen, in welcher eine harte äußere Mantelfläche 108 eines Anschlusses 106 im Anschlussmund 2 an dem zu diesem zeigenden Anschlussende 114 mit einem sich in einem differentiellen Übergang DÜ verjüngenden Anschlussende 114 ausgebildet ist. Wie Fig. 4a gut zeigt, ist die äußere harte (oder hartelastische) Mantelfläche 108 wenigstens im Berührungsbereich mit dem Anschluss 106 z. B. in Form eines um eine gedachte Achse AX rotierenden Paraboloids ausgebildet. Zwischen den mit den Bezugszeichen I und II markierten Mantellinien des Paraboloids verläuft die Mantelfläche 118 in einem differentialem Übergang DÜ und ermöglicht hierdurch eine schrittweise, sich "weich" ändernde Aufweitung des Anschlussmundes vom Durchmesser 110 (bei II und III) auf den Durchmesser 118 (bei I). Der vorteilhafte Effekt dieser erfindungsgemäßen Anordnung ist ein optimales aneinander "Anschmiegen" der beiden Verbindungspartner bei höchstmöglichem weichem Übergang. Im rechten Teil der Fig. 4a ist eine an die harte äußere Mantelfläche 108 des Anschlusses 106 anschließende hartelastische äußere Mantelfläche 18 einer auf das hintere Ende des Anschlusses 106, dessen Außendurchmesser an der Stelle 31 hier abgestuft verringert ist, aufgeschobene Hülse 32 aus vorzugweise hartelastischem Material wie z. B. Kunststoff zu erkennen, deren Außendurchmesser dem des Anschlusses 106 im Wesentlichen gleich ist. Im Inneren des Anschlusses 106 ist eine Durchgangsbohrung 34 eingebracht, welche am rechten Ende des Anschlusses 106 beispielhaft mit einem Innengewinde zum Anschluss von (nicht gezeigten) Verbindungselementen versehen ist.

Fig. 4b zeigt einen Anschluss 106 analog zur Darstellung in Fig. 4a, jedoch mit einer Hülse 36 aus vorzugweise hartelastischem Material, deren Außenumfang und - durchmesser kleiner ist als die der Zylinderfläche des daran anschließenden Anschlusses 106, wobei die Beziehung d₃₆ < d₁₀₆ gilt

Fig. 4c zeigt einen Anschluss 206 analog zur Darstellung in Fig. 4a, mit einer Hülse 36 aus vorzugweise hartelastischem Material, deren Außenumfang und - durchmesser gleich ist als die der Zylinderfläche des daran anschließenden Anschlusses 206, welcher einen über angedeutete Flügel 51 und 52 des Anschlussmundes 2 aus dem textilen Bauteil 202 herausragt und einen Außengewindestutzen 38 trägt, wobei hier die Beziehung d₃₆ = d₂₀₆ gilt.

Fig. 4d zeigt einen Anschluss 106 analog zur Darstellung in Fig. 4a, jedoch mit einer Hülse 40 aus vorzugweise hartelastischem Material, deren Außenumfang- und - durchmesser größer ist als die der Zylinderfläche des daran anschließenden Anschlusses 106, wobei gilt: d₄₀ > d₁₀₆. Diese erfindungsgemäße Variante einer zum Anschluss 106 abgestuft konfigurierten Hülse 40 mit vorzugsweise hartelastischer Mantelfläche 718 ist für den Fall vorgesehen, in welchem man eine von außerhalb des Anschlussmundes 402 kontrollierbare definierte Eindringtiefe des Anschlusses 106 in den Anschlussmund 402 - also bis zum "Anschlag" AS - wünscht. Die in Fig. 4d dargestellte Innenkontur KM des Anschlussmundes 402 entspricht im Prinzip der Außenkontur KA des Anschlusses 106. Analog zur gestuften Konfiguration des Anschlusses 106 mit Hülse 40 sind die Flügel 451 und 452 des Anschlussmundes 402 wie in Fig. 4d gezeigt gestuft konfiguriert.

Fig. 4e zeigt einen Anschluss 306 mit kombiniert harter 308 und hartelastischer 318 Mantelfläche. Das zum (hier nicht gezeigten) Anschlussmund hin orientierte (in Fig. 4e linke) Ende des Anschlusses 306 ist als Hülse 42 mit einer hartelastischen Mantelfläche 318 (z. B. aus Kunststoff) ausgebildet, welche, wie gezeigt, erfindungsgemäß mit differentiellem Übergang DÜ (Einzelheiten siehe oben) konfiguriert ist. Der die Hülse 42 tragende Körper 348 des Anschlusses 306 ist z. B. aus einem (harten) Metallwerkstoff wie Aluminium geformt, welcher, wie gezeigt, an seinem (in Fig. 4e rechten) Ende beispielhaft ein Innengewinde 338 zur Kopplung mit Anschlusseinrichtungen aufweist.

Fig. 4f zeigt einen nicht erfinderischen Anschluss 406 mit einer Hülse 44 mit ausschließlich hartelastischer 418 Mantelfläche. Die hartelastische Mantelfläche 418 ist vorzugsweise aus Kunststoff ausgebildet und erfindungsgemäß mit differentiellem Übergang DÜ (Einzelheiten siehe oben) konfiguriert. Die Hülse 44 ummantelt ein z. B. zylindrisch gestaltetes Kernelement 448, beispielsweise aus dem Werkstoff Aluminium - welches vorteilhafterweise kein Kriechverhalten zeigt -, mit einem Innengewinde 438 zur Kopplung mit Anschlusseinrichtungen.

Schließlich zeigt Fig. 5 einen vom Gassack 4 freigeschnitten dargestellten Anschlussbereich eines Gassacks 4, mit einem bereits im Anschlussmund 2 eingefügten Anschluss 6 und einer hier zusätzlich zur Absicherung der dichten Verbindungsanordnung 1 angebrachten Sicherungsklemme 24. An der mit F gekennzeichneten Stelle des Anschlusses 6 sind jegliche dem Fachmann bekannten Möglichkeiten wie Schraub-, Klemm-, Bajonett-Verschlüsse etc. zum Anschluss von Fittings zur Versorgung des Gassacks 4 mit Füllmedien wie Luft, Gas oder Fluiden aus dem Bereich der Pneumatik oder Hydraulik denkbar.

In Fig. 6 ist die sich in Blickrichtung des Pfeils B aus Fig. 5 ergebende Ansicht dargestellt. Zentral sind der Anschluss 6 zu erkennen, um den sich der aus Gründen der besseren Darstellbarkeit leicht beabstandet gezeichnete in der Realität jedoch am Anschluss 6 satt anliegende Anschlussmund 2 gezeigt. Um den Anschlussmund 2 umgeschlagene Flügel 51 und 52 der Fahne 5 liegen dem äußeren Umfang des Anschlussmundes 2 folgend flächig auf diesem auf. Um dies beispielhaft zu zeigen ist der in Fig. 6 rechte Flügel zunächst in der Ausgangsposition 52', in welcher er in der Ebene des nicht aufgeblähten Gassacks 4 liegt, gezeigt. Der Flügel wird dann dem gestrichelten etwa kreisförmigen Pfeil S folgend "umgeschlagen" und in Position 52 am Anschlussmund 2 angelegt. Die Vorgehensweise garantiert eine knitterfreie "Versorgung" der Flügel 51 und 52, um die zuvor erfindungsgemäß geschaffene dichte Verbindungsanordnung 1 nicht zu gefährden. Die Sicherungsklemme 24, die eine ein- oder mehrfach umschlingende Standardschlauchschelle sein kann, ist ebenso aus Gründen der besseren Darstellbarkeit leicht beabstandet gezeichnet, liegt in der Realität jedoch am Anschlussmund 2 satt an und wird mittels ihrer nur schematisch dargestellten Spanneinrichtung 241 auf dem Anschlussmund 2 satt aufliegend angezogen und sichert damit die erfindungsgemäß geschaffene dichte Verbindungsanordnung 1. Der Anschluss 6 weist mittig einen Zuführkanal M für das Füllmedium für den Gassacks 4 auf.

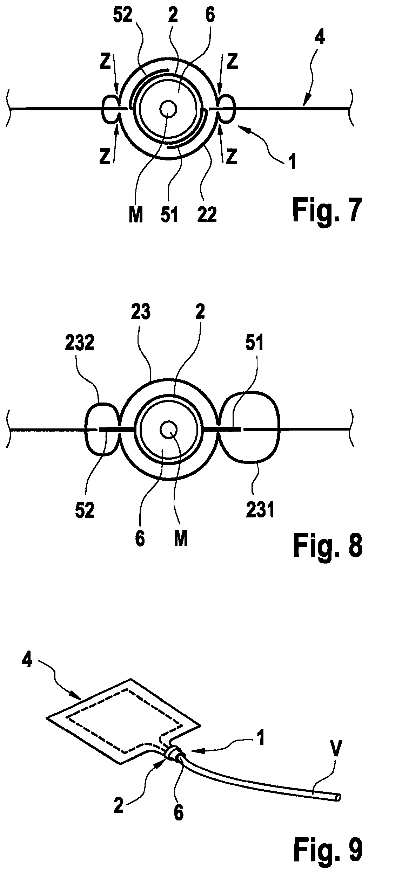

In Fig. 7 wird alternativ zur Version gemäß Fig. 5 und 6 eine die Verbindungsanordnung 1 sichernde Sicherungsklemme in Form einer sog. Ohrenklemme 22 gezeigt. Diese Variante ermöglicht eine einfachere und weniger Aufwand erfordernde Sicherungsklemme für den Anschlussmund 2. Die in der Projektion - wie in Fig. 7 gezeigt - als großer Kreis mit zwei anliegenden Ohren aussehende Ohrenklemme 22 wird durch einen Klemmmechanismus, den in Richtung der vier Pfeile Z an der Klemme angreift auf der Verbindungsanordnung 1 angebracht. Gut zu erkennen in Fig. 7 sind wieder die aus Fig. 6 bekannten umgeschlagenen Flügel 51 und 52.

Fig. 8 zeigt schließlich eine erfindungsgemäß recht vorteilhafte Variante der Sicherungsklemme nach Fig. 7. Hier kommt eine sog. Fahnenklemme 23 zum Einsatz, welche durch einen Zentralteil als großer Kreis mit zwei anliegenden Ohren 231, 232, deren Durchmesser größer sind als bei dem Beispiel der Ohrenklemme 22 gemäß Fig. 7 und dem des großen Kreises des Zentralteils nahekommt. Hierbei ist rechts ein großes Ohr 231 und links ein mittelgroßes Ohr 232 dargestellt. Ein besonders großer Vorteil dieser Fahnenklemme 23 besteht darin, dass ein Umschlagen der Flügel 51 und 52 (siehe Fig. 6 und 7) entfallen kann. Es ergibt sich eine weitere Steigerung der Qualität der Absicherung und damit der Zuverlässigkeit der erfindungsgemäßen Verbindungsanordnung 1 gegen über den zuvor genannten Lösungen. Die jeweiligen Größen werden zweckmäßigerweise an die Bedürfnisse betreffend die Flügelgrößen 51, 52 angepasst. Diese sollen ungestört in ihrer Ausgangslage bleiben können.

Der Klemmbereich der Sicherungsklemme 24 am Anschluss 6 (Fig. 5 bis Fig. 9) kann sich wahlweise über die harte und/oder die hartelastische Mantelfläche erstrecken.

Fig. 9 zeigt einen Gassack 4 mit Verbindungsanordnung 1 in Verbindung mit einer Versorgungsleitung V, welche zu einer (nicht gezeigten) Quelle für das Füllmedium führt.

### Bezugszeichen

- 1: Verbindungsanordnung
- 2: Anschlussmund
- 4: Gassack
- 5: Fahne
- 6: Anschluss
- 8: Mantelfläche
- 10: innerer Umfang
- 12: Umfang der harten äußeren Mantelfläche
- 14: Anschlussende
- 18: hartelastische äußere Mantelfläche
- 20: vom Anschlussmund wegweisende Seite des Anschlusses
- 22: Ohrenklemme
- 23: Fahnenklemme
- 24: Sicherungsklemme
- 25: äußeres Ohr der Fahnenklemme
- 26: äußeres Ohr der Fahnenklemme
- 27: Nahtbereich
- 30: Einrichtung zur Kopplung
- 31: Ort
- 32: Hülse
- 34: Durchgangsbohrung
- 36: Hülse
- 38: Außengewindestutzen
- 40: Hülse
- 42: Hülse
- 44: Hülse
- 51: Flügel
- 52: Flügel
- 106: Anschluss
- 108: Mantelfläche
- 110: innerer Durchmesser
- 112: äußerer Durchmesser
- 114: Anschlussende
- 118: Mantelfläche
- 202: Bauteil
- 206: Anschluss
- 231: Ohr
- 231: Ohr
- 241: Spanneinrichtung
- 306: Anschluss
- 308: harte Mantelfläche
- 318: hartelastische Mantelfläche
- 338: Innengewinde
- 348: Körper
- 402: Anschlussmund
- 451: Flügel
- 452: Flügel
- 402: Anschluss
- 408: Anschluss
- 438: Innengewinde
- 448: Kernelement
- 718: Mantelfläche
- A: Pfeil
- AS: Anschlag
- AX: Achse
- B: Pfeil
- dₙ: Durchmesser
- DÜ: differentieller Übergang
- F: Fittinganschluss
- H: Hohlraum
- KA: Außenkontur
- KM: Innenkontur
- M: Zuführkanal
- O: obere Gewebelage
- S: Pfeil
- U: untere Gewebelage
- V: Versorgungsleitung
- Z: Pfeil
- I: Mantellinie Anschluss
- II: Mantellinie Anschluss
- III: Mantellinie Anschlussmund

## Patentansprüche

1. Verbindungsanordnung zur Verbindung eines Anschlussmundes (2) eines textilen Bauteils, insbesondere eines Gassacks (4) mit einem Anschluss (6), welcher eine ovale oder im Wesentlichen zylindrische harte oder hartelastische äußere Mantelfläche (8) aufweist, wobei der Anschluss (6) in den Anschlussmund (2) eingefügt ist, wobei
a) der innere Umfang (10) des Anschlussmundes (2) vor dem Einfügen des Anschlusses (6) kleiner ist als der Umfang (12) der harten oder hartelastischen Mantelfläche (8) des Anschlusses (6),
b) das Textil des Anschlussmundes mit seinem inneren Umfang flächig am äußeren Umfang der harten Mantelfläche des Anschlusses anliegt und
c) der Anschlussmund im dehnfähigen Bereich des Gewebes des Anschlussmunds geringfügig radial nach außen gedehnt ist, ,
**dadurch gekennzeichnet, dass**
d) sie eine an die harte äußere Mantelfläche (8) des Anschlusses (6) anschließende hartelastische äußere Mantelfläche (18) aufweist.

2. Verbindungsanordnung nach Anspruch 1, **dadurch gekennzeichnet, dass** die harte oder hartelastische äußere Mantelfläche (8) des Anschlusses (6) an ihrem beim Einfügen in den Anschlussmund (2) zu diesem zeigenden Anschlussende (14) verjüngt ist.

3. Verbindungsanordnung nach Anspruch 2, **dadurch gekennzeichnet, dass** die harte oder hartelastische äußere Mantelfläche (8) des Anschlusses (6) an ihrem beim Einfügen in den Anschlussmund (2) zu diesem zeigenden Anschlussende (14) mit einem differentiellen Übergang (DÜ) ausgebildet ist.

4. Verbindungsanordnung nach Anspruch 1, **dadurch gekennzeichnet, dass** sie eine, an die harte äußere Mantelfläche (8) des Anschlusses (6) auf dessen von seinem Anschlussende (14) wegweisender Seite (20) anschließende, hartelastische äußere Mantelfläche (18) aufweist.

5. Verbindungsanordnung nach Anspruch 1, **dadurch gekennzeichnet, dass** sie auf der vom Anschlussende (14) des Anschlussmundes (2) zum textilen Bauteil hinzeigenden Seite eine an die harte äußere Mantelfläche (8) anschließende, hartelastische äußere Mantelfläche (18) aufweist.

6. Verbindungsanordnung nach einem der vorhergehenden Ansprüche, **dadurch gekennzeichnet, dass** der äußere Umfang der hartelastischen äußeren Mantelfläche (18) mit dem Umfang (12) der harten Mantelfläche (8) des Anschlusses (6) im Wesentlichen übereinstimmt.

7. Verbindungsanordnung nach einem der Ansprüche 1 bis 5, **dadurch gekennzeichnet, dass** der äußere Umfang der hartelastischen äußeren Mantelfläche (18) größer ist als der Umfang (12) der harten Mantelfläche (8) des Anschlusses (6).

8. Verbindungsanordnung nach einem der vorhergehenden Ansprüche, **dadurch gekennzeichnet, dass** die harte äußere Mantelfläche (8) und / oder die hartelastische äußere Mantelfläche (18) in ausgewählten Bereichen ringförmige Erhebungen aufweisen.

9. Verbindungsanordnung nach einem der vorhergehenden Ansprüche, **dadurch gekennzeichnet, dass** sie eine den Anschlussmund (2) des textilen Gassacks (4) umschließende Befestigungsschelle (24) aufweist.

10. Verbindungsanordnung nach Anspruch 9, **dadurch gekennzeichnet, dass** die Sicherungsklemme (24) eine Ohrenklemme (22) ist.

11. Verbindungsanordnung nach Anspruch 9, **dadurch gekennzeichnet, dass** die Sicherungsklemme (24) eine Fahnenklemme (23) ist, wobei den Anschlussmund (2) des textilen Gassacks (4) säumende Nahtbereiche (27) radial nach außen in die äußeren Ohren (25, 26) der Fahnenklemme (23) ragen.

12. Verbindungsanordnung nach einem der vorhergehenden Ansprüche, **dadurch gekennzeichnet, dass** der Anschluss (6) eine Einrichtung zur Kopplung mit Anschlussvorrichtungen, insbesondere Standardschraubverbindungen mit Innen- oder Außengewinde aufweist.

13. Verfahren zum Herstellen einer Verbindungsanordnung nach einem der vorhergehenden Ansprüche, **dadurch gekennzeichnet, dass** der Anschlussmund (2) des textilen Gassacks (4) beim Einfügen des Anschlusses (6) in den Anschlussmund (2) radial nach außen gedehnt wird.

## Claims

1. Connection arrangement for connecting a connection mouth (2) of a textile gas bag (4) to a connector (6), which has an oval or substantially cylindrical hard or hard-elastic outer circumferential surface (8), the connector (6) being inserted into the connection mouth (2), wherein
a) the inner circumference (10) of the connection mouth (2) is smaller before insertion of the connector (6) than the circumference (12) of the hard or hard-elastic circumferential surface (8) of the connector (6),
b) the textile of the connection mouth rests with its inner circumference flat on the outer circumference of the hard circumferential surface of the connector and
c) in the stretchable region of the fabric of the connection mouth, the connection mouth (is) stretched slightly radially outwards, **characterised in that**
d) the connection arrangement comprises a hard-elastic outer circumferential surface (18) adjoining the hard outer circumferential surface (8) of the connector (6).

2. Connection arrangement according to claim 1, **characterised in that** the hard or hard-elastic outer circumferential surface (8) of the connector (6) is tapered at its connector end (14) pointing towards the connection mouth (2) on insertion thereinto.

3. Connection arrangement according to claim 2, **characterised in that** the hard or hard-elastic outer circumferential surface (8) of the connector (6) is designed with a differential transition (DÜ) at its connector end (14) pointing towards the connection mouth (2) on insertion thereinto.

4. Connection arrangement according to claim 1, **characterised in that** it has a hard-elastic outer circumferential surface (18) adjoining the hard outer circumferential surface (8) of the connector (6) on its side (20) pointing away from its connector end (14).

5. Connection arrangement according to claim 1, **characterised in that** it has a hard-elastic outer circumferential surface (18) adjoining the hard outer circumferential surface (8)on the side pointing from the connector end (14) of the connection mouth (2) towards the textile component.

6. Connection arrangement according to any of the preceding claims, **characterised in that** the outer circumference of the hard-elastic outer circumferential surface (18) substantially matches the circumference (12) of the hard circumferential surface (8) of the connector (6).

7. Connection arrangement according to one of claims 1 to 5, **characterised in that** the outer circumference of the hard-elastic outer circumferential surface (18) is larger than the circumference (12) of the hard circumferential surface (8) of the connector (6).

8. Connection arrangement according to any of the preceding claims, **characterised in that** the hard outer circumferential surface (8) and/or the hard-elastic outer circumferential surface (18) has/have annular protrusions in selected areas.

9. Connection arrangement according to any of the preceding claims, **characterised in that** it has a mounting clip (24) enclosing the connection mouth (2) of the textile gas bag (4).

10. Connection arrangement according to claim 9, **characterised in that** the safety clip (24) is an ear clip (22).

11. Connection arrangement according to claim 9, **characterised in that** the safety clip (24) is a flag-type clip (23), wherein seam areas (27) bordering the connection mouth (2) of the textile gas bag (4) protrude radially outwards into the outer ears (25, 26) of the flag-type clip (23).

12. Connection arrangement according to any of the preceding claims, **characterised in that** the connector (6) comprises a device for coupling to connector devices, in particular standard screw connections with internal or external thread.

13. Method for producing a connection arrangement according to any of the preceding claims, **characterised in that** the connection mouth (2) of the textile gas bag (4) is stretched radially outwards on inserting the connector (6) into the connection mouth (2).

## Revendications

1. Ensemble de raccordement destiné au raccordement d'une embouchure de raccordement (2) d'un coussin gonflable textile (4) à un raccord (6), qui présente une surface enveloppante (8) extérieure dure ou élastique et dure, ovale ou essentiellement cylindrique, le raccord (6) étant inséré dans l'embouchure de raccordement (2), dans lequel
a) avant l'insertion du raccord (6), la circonférence intérieure (10) de l'embouchure de raccordement (2) est inférieure à la circonférence (12) de la surface enveloppante (8) dure ou élastique et dure du raccord (6),
b) le textile de l'embouchure de raccordement repose à plat avec sa circonférence intérieure sur la circonférence extérieure de la surface enveloppante dure du raccord et
c) l'embouchure de raccordement dans la zone extensible du tissu de l'embouchure de raccordement est légèrement étirée radialement vers l'extérieur
**caractérisé en ce que**
d) il présente une surface enveloppante (18) extérieure élastique et dure adjacente à la surface enveloppante (8) extérieure dure du raccord (6).

2. Ensemble de raccordement selon la revendication 1, **caractérisé en ce que** la surface enveloppante (8) extérieure dure ou élastique et dure du raccord (6) s'amincit à son extrémité de raccordement (14) orientée vers l'embouchure de raccordement (2) lors de l'insertion dans celle-ci.

3. Ensemble de raccordement selon la revendication 2, **caractérisé en ce que** la surface enveloppante (8) extérieure dure ou élastique et dure du raccord (6) est réalisée avec une transition différentielle (DÜ) sur son extrémité de raccordement (14) orientée vers l'embouchure de raccordement (2) lors de l'insertion dans celle-ci.

4. Ensemble de raccordement selon la revendication 1, **caractérisé en ce qu'il** présente une surface enveloppante (18) extérieure élastique et dure adjacente à la surface enveloppante (8) extérieure dure du raccord (6) sur son côté (20) orienté dans la direction opposée à son extrémité de raccordement (14).

5. Ensemble de raccordement selon la revendication 1, **caractérisé en ce qu'**il présente, sur le côté orienté de l'extrémité de raccordement (14) de l'embouchure de raccordement (2) vers le composant textile, une surface enveloppante (8) extérieure élastique et dure adjacente à la surface enveloppante (8) extérieure dure.

6. Ensemble de raccordement selon l'une des revendications précédentes, **caractérisé en ce que** la circonférence extérieure de la surface enveloppante (18) extérieure élastique et dure correspond essentiellement à la circonférence (12) de la surface enveloppante (8) dure du raccord (6).

7. Ensemble de raccordement selon l'une des revendications 1 à 5, **caractérisé en ce que** la circonférence extérieure de la surface enveloppante (18) extérieure élastique et dure est supérieure à la circonférence (12) de la surface enveloppante (8) dure du raccord (6).

8. Ensemble de raccordement selon l'une des revendications précédentes, **caractérisé en ce que** la surface enveloppante (8) extérieure dure et/ou la surface enveloppante (18) extérieure élastique et dure présentent des élévations annulaires dans des zones sélectionnées.

9. Ensemble de raccordement selon l'une des revendications précédentes, **caractérisé en ce qu'**il présente un collier de fixation (24) entourant l'embouchure de raccordement (2) du coussin gonflable (4) textile.

10. Ensemble de raccordement selon la revendication 9, **caractérisé en ce que** la pince de sûreté (24) est une pince à oreilles (22).

11. Ensemble de raccordement selon la revendication 9, **caractérisé en ce que** la pince de sûreté (24) est une pince à ailettes (23), des zones de couture (27) bordant l'embouchure de raccordement (2) du coussin gonflable (4) textile dépassant radialement vers l'extérieur dans les oreilles (25, 26) extérieures de la pince à ailettes (23).

12. Ensemble de raccordement selon l'une des revendications précédentes, **caractérisé en ce que** le raccord (6) présente un dispositif destiné à l'accouplement avec des dispositifs de raccordement, en particulier des raccords vissés standard avec filetage intérieur ou extérieur.

13. Procédé de production d'un ensemble de raccordement selon l'une des revendications précédentes, **caractérisé en ce que** l'embouchure de raccordement (2) du coussin gonflable (4) textile est étirée radialement vers l'extérieur lors de l'insertion du raccord (6) dans l'embouchure de raccordement (2).
